# EUROPÄISCHE PATENTSCHRIFT

(11) **EP 3 931 461 B1**
(45) Veröffentlichungstag und Bekanntmachung des Hinweises auf die Patenterteilung: **08.04.2026**
(21) Anmeldenummer: 19823764.6
(22) Anmeldetag: 05.12.2019
(51) Int. Cl.: F16F 15/12

(54) **TORSIONSSCHWINGUNGSDÄMPFER MIT EINER ROTATIONSACHSE FÜR EINEN ANTRIEBSSTRANG**
TORSIONAL VIBRATION DAMPER WITH A ROTATIONAL AXIS FOR A POWERTRAIN
AMORTISSEUR DE VIBRATIONS DE TORSION COMPRENANT UN AXE DE ROTATION POUR UN GROUPE MOTOPROPULSEUR

(30) Priorität: 27.02.2019 DE 102019105011; 06.08.2019 DE 102019121205
(43) Veröffentlichungstag der Anmeldung: 05.01.2022
(73) Patentinhaber: Schaeffler Technologies AG & Co. KG, 91074 Herzogenaurach (DE)
(72) Erfinder: HÄSSLER, Martin, 76676 Graben-Neudorf (DE); RUSCH, Alain, 67760 Gambsheim (FR); THERIOT, Laurent, 67000 Strasbourg (FR); KESSLER, Michael, 77815 Bühl (DE)
(74) Vertreter: Schaeffler Technologies
(86) Internationale Anmeldenummer: PCT/DE2019/101044
(87) Internationale Veröffentlichungsnummer: WO 2020/173513

(56) Entgegenhaltungen:
- WO-A1-2016/073696
- WO-A1-2018/215018
- DE-A1- 102015 211 899

## Beschreibung

Die Erfindung betrifft einen Torsionsschwingungsdämpfer gemäß dem Oberbegriff des Anspruchs 1 mit einer Rotationsachse für einen Antriebsstrang, aufweisend zumindest die folgenden Komponenten:
- eine Eingangsseite;
- eine Ausgangsseite;
- ein oder mehr Zwischenelemente in drehmomentübertragender Verbindung zwischen der Eingangsseite und der Ausgangsseite;
- je Zwischenelement einen ersten Wälzkörper und einen zweiten Wälzkörper, wobei das zumindest eine Zwischenelement jeweils eine Übersetzungsbahn zum Abwälzen der Wälzkörper aufweist, wobei die Eingangsseite und die Ausgangsseite eine zu der jeweiligen Übersetzungsbahn komplementäre Gegenbahn aufweist;
- eine zu der Anzahl der Zwischenelemente korrespondierende Anzahl von Energiespeicherelementen, mittels welcher das dem jeweiligen Energiespeicherelement zugeordnete Zwischenelement schwingbar abgestützt ist. Der Torsionsschwingungsdämpfer ist vor allem dadurch gekennzeichnet, dass das Energiespeicherelement mit einem Vektoranteil in Umfangsrichtung wirkend angeordnet ist und/oder je Zwischenelement als abwälzbare Körper ausschließlich der erste Wälzkörper und der zweite Wälzkörper vorgesehen sind.

Aus dem Stand der Technik sind Torsionsschwingungsdämpfer verschiedenster Art bekannt. Beispielsweise ist aus der EP 2 508 771 A1 ein Torsionsschwingungsdämpfer bekannt, bei welcher eine Ausgangsseite mit einem (Doppel-) Nocken versehen ist, welcher auf ein hebelartiges Zwischenelement wirkt, wobei das Zwischenelement verkippbar mit einer Scheibe einer Eingangsseite verbunden ist. Das Zwischenelement ist mittels einer Druckfeder gegen den Nocken der Ausgangsseite vorgespannt und wird beim Überlaufen der Nockengeometrie gegen die Druckfeder ausgelenkt. Die Druckfeder ist gegenüberliegend des Zwischenelements mit der Eingangsseite druckkraftübertragend verbunden, und somit wird ein Drehmoment über die Druckfeder von der Eingangsseite auf die Ausgangsseite geleitet.

Aus der FR 3 057 321 A1 ist ein andere Variante eines Torsionsschwingungsdämpfers bekannt, bei welchem an einer Ausgangsseite ein hebelartiger Federkörper nach Art einer (Freiform-) Festkörperfeder vorgesehen ist, wobei dieser Federkörper radial außenseitig eine rampenartige Übersetzungsbahn aufweist, welche mit einer auf dieser Übersetzungsbahn abwälzenden Rolle drehmomentübertragend verbunden sind. Die Rolle ist auf einem Bolzen rotierbar gelagert. Tritt eine Torsionsschwingung auf, so wird eine Relativbewegung zwischen dem Federkörper und der korrespondierenden Rolle bewirkt, und aufgrund der rampenartigen Übersetzungsbahn wird der Federkörper in seiner rotatorischen Relativbewegung zu der Rolle von der Rolle entgegen seiner Federkraft hebelartig ausgelenkt. Damit wird eine Torsionsschwingung gedämpft.

Sowohl die Hebel aus der EP 2 508 771 A1 als auch die Federkörper der FR 3 057 323 A1 sind, sofern eine geringe Dissipation also ein hoher Wirkungsgrad erwünscht ist, technisch schwer zu beherrschen und/oder teuer in der Fertigung beziehungsweise Montage.

Beispielsweise aus der WO 2018 / 215 018 A1 ist ein Torsionsschwingungsdämpfer bekannt, bei welchem zwei Zwischenelemente vorgesehen sind, welche zwischen einer Ausgangsseite und einer Eingangsseite über Wälzkörper gelagert sind. Die Wälzkörper laufen derart auf komplementären Übersetzungsbahnen ab, dass die Zwischenelemente einer Zwangsführung unterliegen. Die beiden Zwischenelemente sind mittels Energiespeicherelementen gegeneinander vorgespannt, sodass die funktionswirksame Steifigkeit der Energiespeicherelemente unabhängig von einer Drehmomentübertragung auslegbar sind. Für viele Anwendungen ist es einerseits erforderlich, die Eigenfrequenz eines drehmomentübertragenden Systems zu reduzieren und zugleich ein hohes Drehmoment übertragen zu können. Aus der ersten Forderung folgt, dass die funktionswirksame Steifigkeit gering sein muss. Aus der zweiten Forderung folgt, dass die Steifigkeit der Energiespeicherelemente groß sein muss. Diese gegensätzlichen Forderungen können mittels der Wälzkörper und der Übersetzungsbahnen gelöst werden. Ein Drehmoment wird einzig mittels der Übersetzungsbahnen und der dazwischen angeordneten Wälzkörper zwischen der Eingangsseite und der Ausgangsseite übertragen. Die funktionswirksame Steifigkeit, welche also die Eigenfrequenz verändert, ist aufgrund der geringen Steigung und der großen Verdrehwinkel in einen geringen Federweg übersetzt. Aus diesem Kurvengetriebe resultiert eine (beliebig) geringe funktionswirksame Steifigkeit. Vorteilhaft bei diesem System ist also, dass die Energiespeicherelemente unabhängig von dem (maximalen) übertragbaren Drehmoment auslegbar sind. Allerdings ist die gezeigte Ausführungsform mit einer hohen Anzahl an separaten Wälzkörpern und den hohen Anforderungen an die komplementären Übersetzungsbahnen aufwendig und teuer in der Fertigung und Montage. Damit ist dieses System nicht in allen Bereichen wettbewerbsfähig.

Aus der DE 10 2015 211 899 A1 ist ferner ein Torsionsschwingungsdämpfer bekannt, der auf den Oberbegriff des Anspruchs 1 lesbar ist.

Der vorliegenden Erfindung liegt die Aufgabe zugrunde, die aus dem Stand der Technik bekannten Nachteile zumindest teilweise zu überwinden.

Diese Aufgabe wird erfindungsgemäß durch einen Torsionsschwingungsdämpfer gemäß Anspruch 1 gelöst. Bevorzugte Ausführungsbeispiele sind in den abhängigen Ansprüchen dargelegt.

Es wird im Folgenden auf eine Rotationsachse Bezug genommen, wenn ohne explizit anderen Hinweis die axiale Richtung, radiale Richtung oder die Umlaufrichtung und entsprechende Begriffe verwendet werden. In der Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Die Erfindung betrifft einen Torsionsschwingungsdämpfer mit einer Rotationsachse für einen Antriebsstrang, aufweisend zumindest die folgenden Komponenten:
- eine Eingangsseite zum Aufnehmen eines Drehmoments;
- eine Ausgangsseite zum Abgeben eines Drehmoments;
- zumindest ein Zwischenelement in drehmomentübertragender Verbindung zwischen der Eingangsseite und der Ausgangsseite;
- je Zwischenelement einen ersten Wälzkörper und einen zweiten Wälzkörper, wobei das zumindest eine Zwischenelement eine erste Übersetzungsbahn zum Abwälzen des ersten Wälzkörpers und eine zweite Übersetzungsbahn zum Abwälzen des zweiten Wälzkörpers aufweist, wobei die Eingangsseite eine zu der ersten Übersetzungsbahn komplementäre erste Gegenbahn und die Ausgangsseite eine zu der zweiten Übersetzungsbahn komplementäre zweite Gegenbahn aufweist, wobei der erste Wälzkörper zwischen der ersten Übersetzungsbahn und der ersten Gegenbahn abwälzbar geführt ist und der zweite Wälzkörper zwischen der zweiten Übersetzungsbahn und der zweiten Gegenbahn abwälzbar geführt ist;
- zumindest ein Energiespeicherelement, mittels welchem das dem Energiespeicherelement zugeordnete Zwischenelement schwingbar abgestützt ist.

Der Torsionsschwingungsdämpfer ist vor allem dadurch gekennzeichnet, dass das Energiespeicherelement mit einem Vektoranteil in Umfangsrichtung auf das zugeordnete Zwischenelement wirkend angeordnet ist.

Der hier vorgeschlagene Torsionsschwingungsdämpfer weist eine geringe Anzahl von separaten Komponenten auf und nur eine geringe Anzahl von Wälzkörpern und komplementären Übersetzungsbahnen, welche hier zwischenelementseitig als Übersetzungsbahn und eingangsseitig beziehungsweise ausgangsseitig als (komplementäre) Gegenbahn bezeichnet werden. Die Eingangsseite ist hier zum Aufnehmen eines Drehmoments eingerichtet, wobei hier nicht ausgeschlossen ist, dass die Eingangsseite auch zum Abgeben eines Drehmoments eingerichtet ist. Beispielsweise bildet die Eingangsseite den Drehmomenteingang in einem Hauptzustand, beispielsweise in einem Antriebstrang eines Kraftfahrzeugs bei einem sogenannten Zugmoment, also einer Drehmomentabgabe von einer Antriebsmaschine, beispielsweise einer Verbrennungskraftmaschine und/oder einer elektrischen Maschine, über einen Getriebestrang auf Fahrzeugräder zum Vortrieb des Kraftfahrzeugs. Die Ausgangsseite ist entsprechend zum Abgeben eines Drehmoments eingerichtet, wobei auch die Ausgangsseite bevorzugt zum Aufnehmen eines Drehmoments eingerichtet ist. Die Ausgangsseite bildet also beispielsweise in der Anwendung in einem Antriebsstrang eines Kraftfahrzeugs in einem Nebenzustand die Eingangsseite für ein sogenanntes Schubmoment, also wenn die Trägheitsenergie des fahrenden Kraftfahrzeugs beim Motorbremsen oder bei der Rekuperation (Gewinnung elektrischer Energie aus der Entschleunigung des Kraftfahrzeugs) das Eingangsdrehmoment bildet.

Damit eine Torsionsschwingung von der Eingangsseite auf die Ausgangsseite oder umgekehrt nicht unmittelbar übertragen wird, ist zumindest ein Zwischenelement vorgesehen, bevorzugt zumindest zwei Zwischenelemente vorgesehen. Das zumindest eine Zwischenelement ist in drehmomentübertragender Verbindung zwischen der Eingangsseite und der Ausgangsseite angeordnet. Das zumindest eine Zwischenelement ist hierbei relativ zu der Eingangsseite und relativ zu der Ausgangsseite bewegbar, sodass eine Torsionsschwingung in das Zwischenelement und damit auf die Energiespeicherelemente mit einer vorbestimmten (funktionswirksamen) Steifigkeit induzierbar ist. Damit ist die Eigenfrequenz, eine Funktion der Masse und der Steifigkeit, des Systems, in welches der Torsionsschwingungsdämpfer eingebunden ist, veränderbar, bevorzugt verringerbar.

Das Zwischenelement ist mittels zumindest eines Energiespeicherelements, beispielsweise einer Bogenfeder, einer Blattfeder, einem Gasdruckspeicher oder vergleichbarem, an sich selbst oder einem benachbarten Zwischenelement abgestützt. Das Energiespeicherelement ist an einer entsprechenden, bevorzugt einstückigen, Verbindungseinrichtung des zugeordneten Zwischenelements kraftübertragend beziehungsweise momentübertragend abgestützt. Beispielsweise ist die Verbindungseinrichtung eine Anlagefläche und/oder eine Nietstelle.

Das zumindest eine Zwischenelement ist an der Eingangsseite und an der Ausgangsseite jeweils mittels der in Reihe geschalteten Wälzkörper abgestützt, wobei das Zwischenelement für jeweils einen der Wälzkörper eine Übersetzungsbahn aufweist und an der Eingangsseite und an der Ausgangsseite jeweils eine komplementäre Gegenbahn für denselben (zugeordneten) Wälzkörper ausgebildet ist. Die komplementäre Gegenbahn ist von der Ausgangsseite beziehungsweise von der Eingangsseite gebildet, bevorzugt mit der Eingangsseite und der Ausgangsseite jeweils einstückig. Über die Gegenbahn und Übersetzungsbahn wird ein Drehmoment übertragen. Über das zumindest eine Energiespeicherelement wird kein Drehmoment zwischen der Eingangsseite und der Ausgangsseite übertragen.

Wird beispielsweise ein Drehmoment, beispielsweise von der Eingangsseite, eingeleitet, so werden infolge eines vorliegenden Drehmomentgradients über dem Torsionsschwingungsdämpfer die Wälzkörper auf der Übersetzungsbahn und der komplementären Gegenbahn aus einer Ruhelage in der entsprechenden Richtung auf der rampenartigen Übersetzungsbahn (hoch) gewälzt. Mit einem hoch Wälzen ist hier lediglich zur Veranschaulichung bezeichnet, dass eine Arbeit verrichtet wird. Genauer wird aufgrund des geometrischen Zusammenhangs eine entgegenstehende Kraft des Energiespeicherelements überwunden. Ein runter Wälzen bedeutet also ein Abgeben eingespeicherter Energie von dem Energiespeicherelement in Form einer Kraft auf das zugeordnete Zwischenelement. Hoch und runter entsprechend also nicht zwangsläufig einer Raumrichtung, auch nicht in einem mitrotierenden Koordinatensystem.

Mit dieser drehmomentbedingten Bewegung zwingen die Wälzkörper dem zugehörigen Zwischenelement eine relative Bewegung gegenüber der Eingangsseite und der Ausgangsseite auf und das antagonistisch wirkende Energiespeicherelement wird entsprechend gespannt. Tritt eine Änderung des anliegenden Drehmoments und einhergehend eine Drehzahldifferenz zwischen der Eingangsseite und der Ausgangsseite auf, wie beispielsweise bei einer Torsionsschwingung, so steht dem die Trägheit der anderen (drehmomentaufnehmenden) Seite, hier der Ausgangsseite, entgegen und die Wälzkörper wälzen (in vorbestimmter Weise) auf der Übersetzungsbahn sowie auf der komplementären Gegenbahn um die dem anliegenden Drehmoment entsprechenden Lage hin und her. Damit arbeiten die Wälzkörper dem von einem Drehmomentbetrag abhängig gespannten Energiespeicherelement entgegen, sodass eine Eigenfrequenz im Vergleich zu einer Ruhelage beziehungsweise einer Drehmomentübertragung ohne Torsionsschwingungsdämpfer (aber gleicher mitbewegter Schwungmasse) verändert ist.

Die Kraft wird in Form von einer Stauchung, Dehnung, Torsion oder anderen Energieeinspeicherung von dem entsprechend ausgeführten Energiespeicherelement aufgenommen und zeitverzögert, bevorzugt (nahezu) dissipationsfrei, an die jeweils andere Seite, hier beispielsweise die Ausgangsseite, weitergegeben. Der Drehmomenteintrag, hier beispielsweise die Eingangsseite, inklusive der Torsionsschwingung wird damit, bevorzugt (nahezu) verlustfrei, zeitlich verändert, hier beispielsweise an die Ausgangsseite, weitergegeben. Darüber hinaus ist die Eigenfrequenz wie oben erläutert nicht konstant, sondern infolge der veränderbaren Lage des Zwischenelements von dem Drehmomentgradienten und damit von dem anliegenden Drehmoment abhängig.

In einem umgekehrten Fall der Einleitung eines Drehmomenteintrags über die Ausgangsseite zur Abgabe an die Eingangsseite, werden die Wälzkörper entsprechend in der anderen (im Vergleich zu der vorstehenden Beschreibung der Einleitung eines Drehmoments über die Eingangsseite entgegengesetzten) Richtung auf der Übersetzungsbahn (hoch) gewälzt. Diese Bewegung der Wälzkörper verursachen eine Belastung des Energiespeicherelements in der anderen Richtung beziehungsweise bei einer paarigen Anordnung eine Entlastung an dem nach obigem Beispiel belasteten, beispielsweise ersten, Energiespeicherelement und eine Belastung des jeweils anderen, beispielsweise zweiten, Energiespeicherelements. Bei einer gegenseitigen Abstützung von zwei oder mehr Zwischenelementen mittels jeweils eines (gemeinsamen) Energiespeicherelements in einer Kreisanordnung werden alle Energiespeicherelemente gespannt, beispielsweise nach Art einer Schraubzwinge mittels einer radialen Inwärtsverschiebung der Energiespeicherelemente.

Bei einer Änderung des Drehmoments, wie sie bei einer Torsionsschwingung auftritt, wird das zumindest eine Energiespeicherelement um die dem anliegenden Drehmoment entsprechenden Lage ausgelenkt und die eingespeicherte Energie in Form von einer veränderten, also zeitlich verzögerten Bewegung, im Zusammenwirken mit den abwälzenden Wälzkörpern zwischen der jeweiligen Übersetzungsbahn und komplementären Gegenbahn, hier auf die Ausgangsseite, übertragen. Damit wird die Eigenfrequenz des drehmomentübertragenden Systems, in welches der Torsionsschwingungsdämpfer eingebunden ist, verändert.

In einer Ausführungsform sind zwei oder mehr Zwischenelemente vorgesehen, welche bevorzugt zu der Rotationsachse rotationssymmetrisch angeordnet sind, sodass der Torsionsschwingungsdämpfer mit einfachen Mitteln ausgewuchtet ist. Für eine geringe Anzahl von Komponenten und (Übersetzungs-) Bahnen ist eine Ausführungsform mit genau zwei Zwischenelementen vorteilhaft.

Bevorzugt sind jeweils zwei Energiespeicherelemente zum Einwirken auf ein (einziges) Zwischenelement vorgesehen, wobei die Energiespeicherelemente einander antagonistisch angeordnet sind und bevorzugt entsprechend der Ausführungsform der Übersetzungsbahnen und komplementären Gegenbahnen miteinander ins Gleichgewicht gebracht sind. In einer alternativen Ausführungsform ist zumindest eine Zwangsführung vorgesehen, mittels welcher zumindest einem der Zwischenelemente geometrisch geführt eine Bewegung aufgezwungen ist, beispielsweise nach Art von einer Schiene beziehungsweise Nut und umgreifendem Zapfen beziehungsweise hineingreifender Feder.

Die Energiespeicherelemente wirken gemäß diesem Vorschlag (abweichend von Ausführungsformen des nachfolgenden Vorschlags) mit einer Kraftrichtung mit einem Vektoranteil in Umfangsrichtung auf das zugeordnete Zwischenelement ein. Die Umfangsrichtung ist an einem konzentrischen Kreis zu der Rotationsachse definiert.

Die Umfangsrichtung ist in einer Ausführungsform über eine Bewegung des zugeordneten Zwischenelements konstant ausgerichtet, wandernd an einem konstanten Kreis oder konstant oder wandernd an einem veränderlichen Kreis ausgerichtet. Der Kreis ist zumindest so groß, dass er das Zwischenelement berührt, bevorzugt so groß, dass der Kreis einen Kontaktpunkt oder eine Kontaktfläche, an welcher Stelle die Kräfte zwischen dem betreffenden Energiespeicherelement und dem zugeordneten Zwischenelement übertragen wird, schneidet. Eine Umfangsrichtung ist zu einem Radius mit der Rotationsachse als Zentrum senkrecht ausgerichtet. Der jeweils zugrundeliegende Radius schneidet den Kontaktpunkt beziehungsweise die Kontaktfläche von dem Energiespeicherelement und dem Zwischenelement. An dem Zwischenelement ergibt sich so eine Kraftrichtung mit einem großen Vektoranteil in Umfangsrichtung, bevorzugt mit einem Vektoranteil in Umfangsrichtung, welcher größer ist als der Vektoranteil in radialer Richtung. Das heißt, die Kraft auf das Zwischenelement ist nicht rein radial ausgerichtet, sondern ausschließlich (im Kontaktpunkt) tangential zu der Umfangsrichtung oder mit einem radialen Vektoranteil und mit einem (im Kontaktpunkt) tangentialen Vektoranteil. Damit ergibt sich eine Kraftrichtung, welche in dasselbe Zwischenelement (von der anderen Seite), beispielsweise mittels einer Schraubenbogenfeder, oder in das benachbarte Zwischenelement etwa entlang der Umfangsrichtung überleitbar ist. Dies ermöglicht beispielsweise anstelle einer Auslenkung (beziehungsweise Schwingung) des Energiespeicherelements ausschließlich in (radialer) Querrichtung eine Auslenkung zusätzlich oder ausschließlich in Umfangsrichtung. In einer vorteilhaften Ausführungsform ist das Zwischenelement dabei über die Wälzkörper unzureichend definiert abgestützt, beispielsweise ausschließlich radial definiert abgestützt, wobei das zumindest eine Energiespeicherelement die Bewegung infolge der Krafteinleitungsrichtung definiert, beispielsweise ausschließlich in Umfangsrichtung. Alternativ ist eine zusätzliche Führung für das Zwischenelement vorgesehen.

Gemäß einem weiteren Aspekt ist ein Torsionsschwingungsdämpfer mit einer Rotationsachse für einen Antriebsstrang vorgeschlagen, aufweisend zumindest die folgenden Komponenten:
- eine Eingangsseite zum Aufnehmen eines Drehmoments;
- eine Ausgangsseite zum Abgeben eines Drehmoments;
- zumindest zwei Zwischenelemente in drehmomentübertragender Verbindung zwischen der Eingangsseite und der Ausgangsseite;
- je Zwischenelement einen ersten Wälzkörper und einen zweiten Wälzkörper, wobei die Zwischenelemente jeweils eine erste Übersetzungsbahn zum Abwälzen des ersten Wälzkörpers und eine zweite Übersetzungsbahn zum Abwälzen des zweiten Wälzkörpers aufweist, wobei die Eingangsseite eine zu der ersten Übersetzungsbahn komplementäre erste Gegenbahn und die Ausgangsseite eine zu der zweiten Übersetzungsbahn komplementäre zweite Gegenbahn aufweist, wobei der erste Wälzkörper zwischen der ersten Übersetzungsbahn und der ersten Gegenbahn abwälzbar geführt ist und der zweite Wälzkörper zwischen der zweiten Übersetzungsbahn und der zweiten Gegenbahn abwälzbar geführt ist;
- eine zu der Anzahl der Zwischenelemente korrespondierende Anzahl von Energiespeicherelementen, mittels welcher das dem Energiespeicherelement zugeordnete Zwischenelement schwingbar abgestützt ist,
wobei jedes der Zwischenelemente mittels der zugeordneten Energiespeicherelemente an dem jeweils zumindest einen benachbarten Zwischenelement abgestützt ist.

Der Torsionsschwingungsdämpfer ist vor allem dadurch gekennzeichnet, dass je Zwischenelement als abwälzbare Körper ausschließlich der erste Wälzkörper und der zweite Wälzkörper vorgesehen sind.

Es wird auf die vorhergehende Erläuterung des zugrundeliegenden Prinzips sowie auf die Definitionen und die Zusammenhänge der Eingangsseite, der Ausgangsseite, eines jeweiligen Zwischenelements und zugeordneten Energiespeicherelements, sowie der Wälzkörper mit den zugeordneten Übersetzungsbahnen und Gegenbahnen verwiesen. Im Unterschied zu der vorigen Beschreibung sind hier unbedingt zumindest zwei Zwischenelemente und zumindest ein, bevorzugt zwei, Energiespeicherelemente vorgesehen, wobei die Zwischenelemente aneinander mittels des zumindest einen Energiespeicherelements kraftübertragend abgestützt sind.

Das zumindest eine Energiespeicherelement ist gemäß diesem Vorschlag (abweichend von Ausführungsformen des vorstehend genannten Vorschlags) über die Wälzkörper unbedingt unzureichend definiert, beispielsweise ausschließlich radial definiert, abgestützt, indem ausschließlich zwei Wälzkörper bei jedem Zwischenelement vorgesehen sind, also ein einziger (beispielsweise erster) Wälzkörper zu der Eingangsseite und ein einziger (beispielsweise zweiter) Wälzkörper zu der Ausgangsseite. Das zumindest eine Energiespeicherelement, welches auf ein Zwischenelement einwirkt und an dem zumindest einen (unmittelbar) benachbarten Zwischenelement abgestützt ist, definiert die Bewegung infolge der Krafteinleitungsrichtung, beispielsweise ausschließlich in Umfangsrichtung. Für eine sichere Ausgestaltung ist beispielsweise zusätzlich eine Zwangsführung vorgesehen, mittels welcher die Bewegung des jeweiligen Zwischenelements (geometrisch) überdefiniert ist.

Es wird weiterhin vorgeschlagen, dass der Torsionsschwingungsdämpfer die Merkmale der vorstehenden Ausführungsformen aufweist.

Bei dieser Ausführungsform ist also ein jeweiliges Zwischenelement der Mehrzahl von Zwischenelementen mittels ausschließlich zwei Wälzkörpern abgestützt, also insofern unterbestimmt abgestützt oder nur gerade bestimmt abgestützt, sofern die Kraft zur Lagesicherung der Übersetzungsbahn zu der komplementären Gegenbahn und dem dazwischen abwälzenden Wälzkörper sowie der absichtlich geschaffene Freiheitsgrad auf der Übersetzungsbahn, beispielsweise ausgeführt als indifferente Gleichgewichtslage, unberücksichtigt bleibt. Diese Kraft ist beispielsweise im Betrieb von der Trägheitsreaktion auf die Zentripetalkraft (Zentrifugalkraft) unterstützt. Der absichtlich geschaffene Freiheitsgrad der Übersetzungsbahn, beispielsweise als indifferentes Gleichgewicht, ist von den beiden Energiespeicherelementen definiert aufgenommen. Beispielsweise führt ein Abwälzen eines Wälzkörpers auf der Übersetzungsbahn (und komplementären Gegenbahn) zu einer Bewegung mit radialem und/oder tangentialen Vektoranteil. Daraus folgend wird ein Weg zurückgelegt, welcher als Potential in zumindest einem der zugeordneten Energiespeicherelemente eingespeichert wird. Weiterhin ist bevorzugt von den Energiespeicherelementen zudem die notwendige Kraft, beispielsweise ausschließlich radial wirkende Kraft, aufgebracht, um die Gegenbahn und die Übersetzungsbahn derart gegeneinander zu halten, dass der zugeordnete Wälzkörper ausschließlich abwälzend dazwischen bewegbar ist. Damit ist von einer Bewegung eines Wälzkörpers stets eine relative Bewegung zwischen der Gegenbahn und der komplementären Übersetzungsbahn und damit zwischen dem Zwischenelement und der Eingangsseite und der Ausgangsseite induziert. Eine Abstützung in radialer Richtung und/oder eine Zwangsführung für das Zwischenelement, beispielsweise mittels einer größeren Anzahl von Wälzkörpern, ist nicht notwendig.

Es wird weiterhin in einer vorteilhaften Ausführungsform des Torsionsschwingungsdämpfers vorgeschlagen, dass genau drei Zwischenelemente und genau drei Energiespeicherelemente vorgesehen sind, wobei das erste Zwischenelement und das zweite Zwischenelement mittels des ersten Energiespeicherelements, das zweite Zwischenelement und das dritte Zwischenelement mittels des zweiten Energiespeicherelements, sowie das erste Zwischenelement und das dritte Zwischenelement mittels des dritten Energiespeicherelements aneinander abgestützt sind.

Bei dieser Ausführungsform ist zum einen die Anzahl der Zwischenelemente, Übersetzungsbahnen, Gegenbahnen, Wälzkörper und Energiespeicherelement noch gering, zum anderen aber ist der Aufwand hinsichtlich der Fertigungstoleranzen an den Übersetzungsbahnen und Gegenbahnen im Vergleich zu einer Zwangsführung mit mehr als zwei Wälzkörpern je Zwischenelement verringert. In dieser Ausführungsform ist in einem auslegungsgemäßen Rahmen, beispielsweise vorgegeben von den geometrischen Gegebenheiten, eine fertigungsbedingte Abweichung von der idealen Ausrichtung des Zwischenelements in der Ruhelage in einem größeren Ausmaß tolerierbar und/oder von den Energiespeicherelementen bei einem Justiervorgang kompensierbar.

Es wird weiterhin in einer vorteilhaften Ausführungsform des Torsionsschwingungsdämpfers vorgeschlagen, dass das zumindest eine Zwischenelement einzig mittels des zumindest einen zugeordneten Energiespeicherelements und mittels der Wälzkörper gelagert ist.

Bei dieser Ausführungsform ist das Zwischenelement ohne zusätzliche (Zwangs-) Führungselemente einzig mittels der Übersetzungsbahnen, der komplementären Gegenbahnen und der jeweiligen Wälzkörper im Zusammenspiel mit den zugeordneten Energiespeicherelementen in ein stabiles Gleichgewicht gebracht. Mit einem stabilen Gleichgewicht ist hier gemeint, dass es zumindest von einem auslegungsgemäßen Drehmomentausschlag und Drehmomentschwingungen nicht aus einer Soll-Lage herausführbar ist. Zumindest für mobile Anwendungen ist das Gleichgewicht derart stabil, dass auch (auslegungsgemäße) Querkräfte, beispielsweise Erschütterungen, diese Anordnung nicht aus einer Soll-Lage herausführbar ist, beispielsweise der Wälzkörper nicht von einer seiner Bahnen abhebbar ist. Der Vektoranteil der Kraft der Energiespeicherelemente in radialer Richtung beziehungsweise senkrecht zu (dem anliegenden Abschnitt) der Übersetzungsbahn und Gegenbahn ist stets größer als eine abhebende (Außen-) Kraft.

Dies ist gewährleistet, wenn die Kraftrichtungen der eingeleiteten Kräfte, also die Ausrichtung des Kraftvektors entlang oder parallel zu einer Wirklinie, der Energiespeicherelemente sich unabhängig von der Auslenkung des Zwischenelements in dem Momentenbilanzpunkt des Zwischenelements mit denjenigen Wirklinien der resultierenden (Gegen-) Kräfte über den Wälzkörpern schneidet, welche durch das Wälzzentrum (Wälzachse) des Wälzkörpers verläuft und senkrecht zu der Übersetzungsbahn und zu der komplementären Gegenlaufbahn ausgerichtet ist. Somit liegt an dem Zwischenelement um den Momentenbilanzpunkt des Zwischenelements ein Momentengleichgewicht vor. Daraus folgt intrinsisch, dass der Kraftanteil der über die Wälzkörper geleiteten Kraftvektoren der Kräfte beziehungsweise den auf das Zwischenelement wirkenden Kraftanteile der Energiespeicherelemente entspricht. Das heißt, wird die Kraft der Energiespeicherelemente erhöht, erhöht sich bei dieser Konstruktionsregel auch die resultierende Kraft über die Wälzkörper. Die Kraftvektoren bei zwei antagonistischen Energiespeicherelementen bildet somit ein (geschlossenes) Krafteck, also nach Vektoradditionsregeln die Kraftsumme null.

Es wird weiterhin in einer vorteilhaften Ausführungsform des Torsionsschwingungsdämpfers vorgeschlagen, dass die beiden Wälzkörper radial zueinander beabstandet angeordnet sind.

Vorteil dieser Ausführungsform ist ein geringer erforderlicher Bauraum in Umfangsrichtung, sodass beispielsweise die Zwischenelemente in Umfangsrichtung schmal ausführbar sind und damit mehr Bauraum für die Energiespeicherelemente und damit beispielsweise ein großer Verdrehwinkel, und damit eine geringe funktionswirksame Steifigkeit bei gleichzeitig hoher Steifigkeit des zumindest einen Energiespeicherelements einstellbar ist.

Es wird weiterhin in einer vorteilhaften Ausführungsform des Torsionsschwingungsdämpfers vorgeschlagen, dass die beiden Wälzkörper in Umfangsrichtung zueinander beabstandet angeordnet sind.

Vorteil dieser Ausführungsform ist ein geringer erforderlicher radialer Bauraum, sodass beispielsweise die Zwischenelemente auf einem großen Umfangskreis anordenbar sind und damit beispielsweise ein großer Verdrehwinkel, und damit eine geringe funktionswirksame Steifigkeit bei gleichzeitig hoher Steifigkeit des zumindest einen Energiespeicherelements einstellbar ist. Alternativ oder zusätzlich ist ein Drehmoment über gleiche Übersetzungsbahnen und damit betragsgleich übertragbar.

Es wird weiterhin in einer vorteilhaften Ausführungsform des Torsionsschwingungsdämpfers vorgeschlagen, dass die beiden Wälzkörper radial und in Umfangsrichtung zueinander beabstandet angeordnet sind.

Bei dieser Ausführungsform sind die Vorteile der vorstehend genannten Ausführungsform miteinander kombinierbar beziehungsweise mit jeweils geringen Abweichungen an ein Ideal annäherbar.

Es wird weiterhin in einer vorteilhaften Ausführungsform des Torsionsschwingungsdämpfers vorgeschlagen, dass die Übersetzungsbahnen und die jeweils komplementären Gegenbahnen jeweils eine Zugmomentpaarung mit einer ersten Übersetzungskurve und eine Schubmomentpaarung mit einer zweiten Übersetzungskurve umfassen, wobei die Zugmomentpaarung zur Drehmomentübertragung von der Eingangsseite auf die Ausgangsseite eingerichtet ist, und wobei die Schubmomentpaarung zur Drehmomentübertragung von der Ausgangsseite auf die Eingangsseite eingerichtet ist,
und wobei die erste Übersetzungskurve und die zweite Übersetzungskurve zumindest bereichsweise voneinander unterschiedliche Übersetzungsverläufe aufweisen.

Grundsätzlich unterscheiden sich ein Zugmoment und ein Schubmoment in einem theoretischen Anwendungsfall nicht. Die Begriffe sind daher neutral zu sehen und dienen einzig einer einfachen Unterscheidbarkeit der bezeichneten Drehmomentübertragungsrichtung. Diese Begriffe sind den üblichen Bezeichnungen in einem Antriebsstrang eines Kraftfahrzeugs entnommen, aber für andere Anwendungen entsprechend übertragbar. Die Zugmomentpaarung liegt bei einer Zugmomentübertragung, beispielsweise von der Eingangsseite auf die Ausgangsseite an, wobei mit zunehmendem Drehmoment der Wälzkörper auf der Zugmomentpaarung entgegen der Kraft des antagonistischen Energiespeicherelements (hoch) wälzt. Damit wird das Potential dieses antagonistischen Energiespeicherelements erhöht, beispielsweise gespannt und damit die Steifigkeit verändert. Torsionsschwingungen wirken daher mit zunehmendem Drehmoment einer größeren Kraft des antagonistischen Energiespeicherelements entgegen und die Eigenfrequenz ist damit verändert. Für die Schubmomentpaarung gilt dies entsprechend, wobei der Wälzkörper infolge der Belastung des Energiespeicherelements zum (hoch) Wälzen auf der Schubmomentpaarung gezwungen wird.

Bei dieser Ausführungsform ist die erste Übersetzungskurve und die zweite Übersetzungskurve, welche jeweils von einem gemeinsamen Punkt der Ruhelage beginnen, mit unterschiedlichen Übersetzungsverläufen versehen. Die Steifigkeitseigenschaften des Torsionsschwingungsdämpfers sind daher individuell für ein Zugmoment und ein Schubmoment (unterschiedlich) einrichtbar.

**In** einer Ausführungsform ist beispielsweise für das Übertragen eines Zugmoments eine geringe Steifigkeit erforderlich, was entsprechend über einen größeren Verdrehwinkel (ein geringeres Untersetzungsverhältnis, also kleinerer Nenner des Übersetzungsverhältnisses) erreichbar ist als dies für ein Schubmoment (ein größeres Untersetzungsverhältnis) erwünscht ist. Weiterhin ist beispielsweise ein progressiver oder degressiver Steifigkeitsverlauf erwünscht oder sogar ein mehrfach veränderlicher Steifigkeitsverlauf erwünscht. Beispielsweise ist für den leerlaufnahen Bereich ein geringer Steifigkeitsanstieg, für ein Hauptlastdrehmoment ein steiler Steifigkeitsanstieg, welcher sich wieder zunehmend degressiv verringert, und bis zu einem Maximalübertrag eines übertragbaren Drehmoments ist wieder ein progressiver Anstieg der Steifigkeit eingerichtet.

Die Übersetzungsbahn und die komplementäre Gegenbahn sind dabei entsprechend der jeweiligen Auslenkungslage des Zwischenelements auszulegen, sodass die Übersetzungskurve mit der Bewegung des Zwischenelements überlagert auszuführen ist. Die Übersetzungsbahn und die komplementäre Gegenbahn sind bevorzugt für ein Momentengleichgewicht gemäß der vorstehenden Beschreibung ausgeführt, bevorzugt sodass keine zusätzliche Führungseinrichtung für das Zwischenelement notwendig ist.

Es wird weiterhin in einer vorteilhaften Ausführungsform des Torsionsschwingungsdämpfers vorgeschlagen, dass das zumindest eine Zwischenelement mittels zwei antagonistischen Energiespeicherelementen vorgespannt ist.

In dieser Ausführungsform ist eine Vorspannung der Energiespeicherelemente über das Zwischenelement beziehungsweise die Zwischenelemente gegen die Wälzkörper gut beherrschbar zuverlässig einstellbar. Beispielsweise ist bei baugleichen Energiespeicherelementen die Abhängigkeit von Bauteiltoleranzen, beispielsweise der Federkennlinie eines Energiespeicherelements, gering, indem sich die Toleranzen gegenseitig verringern, beispielsweise eine nach unten abweichende Steifigkeit von der Soll-Steifigkeit des ersten Energiespeicherelements wird von der nach oben abweichenden Steifigkeit des zweiten Energiespeicherelements ausgeglichen oder gemindert. Bei gleicher Abweichungsrichtung ist die Vorspannung zwar insgesamt reduziert oder erhöht im Vergleich zu der Soll-Vorspannung aber dennoch infolge der antagonistischen Wirkung, beispielsweise beidseitig des Zwischenelements, ausgeglichen. In einer Ausführungsform ist lediglich die Ruhelage des Zwischenelements verändert. Bevorzugt ist die Toleranz derart gering, dass die Ruhelage innerhalb eines vorbestimmten Toleranzbereichs bleibt. Bei einer Ausführungsform mit drei Zwischenelementen sind die (drei) Energiespeicherelemente miteinander derart in Verbindung, dass auch das erste (beziehungsweise zweite) Energiespeicherelement des ersten Zwischenelements mit dem zweiten (beziehungsweise ersten) Energiespeicherelement des zweiten Zwischenelements in antagonistischer Wirkverbindung steht und ein ausgleichender Effekt auf die Bauteiltoleranz der Energiespeicherelemente erzielt ist. Insgesamt sinkt damit die erforderliche Fertigungsgenauigkeit, der Montageaufwand beziehungsweise der Justieraufwand und/oder der Kostenaufwand für Standardbauteile aufgrund einer geringeren Bauteilgüte.

Es wird weiterhin in einer vorteilhaften Ausführungsform des Torsionsschwingungsdämpfers vorgeschlagen, dass das erste Energiespeicherelement eine erste Kraft und eine erste Kraftrichtung auf das zugeordnete Zwischenelement ausübt und das zweite Energiespeicherelement eine zweite Kraft und eine zweite Kraftrichtung auf das zugeordnete Zwischenelement ausübt,
wobei sich die erste Kraft und die zweite Kraft voneinander unterscheiden und/oder sich die erste Kraftrichtung und die zweite Kraftrichtung in einer Ruhelage voneinander unterscheiden.

Es sei darauf hingewiesen, dass die Energiespeicherelemente nicht um eine radiale Achse verkippen beziehungsweise eine solche Verkippung nicht zuträglich für eine Beeinflussung der Eigenfrequenz ist. Die hier beschriebene Kraftrichtung ist also als Vektor definiert, welcher in der Rotationsebene liegt, zu welcher die Rotationsachse normal ausgerichtet ist. Weiterhin sei darauf hingewiesen, dass die Kraftrichtung der beiden antagonistischen Energiespeicher stets nicht gleich ist, sofern sie in einem globalen, also gemeinsamen, Koordinatensystem betrachtet werden. Hier ist also die Kraftrichtung im Vergleich zu der Spiegelung der jeweils anderen Kraftrichtung, nämlich die Spiegelung an einer Ruheachse beziehungsweise Mittellinie (in der Ruhelage) des Zwischenelements und unter Umständen der Kraftseite, gemeint, welche dann von der jeweils anderen Kraftrichtung abweicht. Die Mittellinie des Zwischenelements ist hierbei nicht auf die geometrische oder massebedingte Mitte bezogen, sondern auf die wirkenden Kräfte.

Die Kraft bezeichnet hier einzig den Betrag eines Kraftvektors, wobei sich der Kraftvektor also in die Kraft (Betrag) und die Kraftrichtung (Wirkrichtung) zerlegen lässt.

Weiterhin sei darauf hingewiesen, dass sich die Kräfte und Kraftrichtungen der beiden antagonistischen Energiespeicherelemente bei einer symmetrischen Auslegung in einem ausgelenkten Zustand des Zwischenelements voneinander unterscheiden und bei einer nicht-symmetrischen Auslegung, wie hier vorgeschlagen, in einem ausgelenkten Zustand gleich sein können.

Bei dieser Ausführungsform ist für eine Zugmomentübertragung und eine dem entgegengerichtete Schubmomentübertragung jeweils eine unterschiedliche Momenten-Kennlinie eingerichtet, sodass die Beeinflussung der Eigenfrequenz mittels des Torsionsschwingungsdämpfers momentrichtungsabhängig unterschiedlich ist. Bevorzugt ist das Zwischenelement hierbei wie zuvor beschrieben mittels einer entsprechenden Übersetzungsbahn ins Gleichgewicht gebracht.

In einer Ausführungsform sind die beiden eingesetzten antagonistischen Energiespeicherelemente (im nicht eingebauten, also entspannten Zustand) gleich. Hierbei ist die unterschiedliche Kraft beispielsweise mittels der voneinander abweichenden Form der Zugmomentpaarung und der Schubmomentpaarung der Übersetzungsbahn eingerichtet (vergleiche vorstehende Beschreibung dazu). In einer anderen Variante ist die unterschiedliche Kraft mittels eines unterschiedlich langen Einbau-Abstands zwischen der Kraftseite und dem Zwischenelement eingerichtet.

Die unterschiedliche Kraftrichtung ist beispielsweise durch eine unterschiedliche Neigung der Anlageflächen an dem Zwischenelement und/oder an der Kraftseite für die beiden antagonistischen Energiespeicherelemente erreicht. In einer Ausführungsform ist die Kraftrichtung über eine Auslenkung des Zwischenelements variabel, indem zumindest eines der beiden antagonistischen Energiespeicherelemente dabei um eine Achse parallel zu der Rotationsachse verkippt. Infolge einer unterschiedlichen Kraftrichtung ist bei ansonsten identischen Energiespeicherelementen der Einfederweg, also die Energieaufnahme bei einer (gleichen) Auslenkung des Zwischenelements unterschiedlich. Damit ist in dieser Einbausituation die Steifigkeit identischer antagonistischer Energiespeicherelemente unterschiedlich. Es ist hinsichtlich der Kosten und des Montageaufwands beziehungsweise der Montagesicherheit vorteilhaft, gleiche Energiespeicherelemente einzusetzen. In vorstehendem Zusammenhang sind identische Energiespeicherelemente jedoch einzig zur Verdeutlichung des Zusammenhangs genannt und die Anwendung unterschiedlicher Kraftrichtungen ist nicht auf einen solchen Fall beschränkt.

Es wird weiterhin in einer vorteilhaften Ausführungsform des Torsionsschwingungsdämpfers vorgeschlagen, dass das zumindest eine Energiespeicherelement eine Schraubendruckfeder mit gerader Federachse ist.

Eine Schraubendruckfeder mit gerader Federachse, auch als (rein) zylindrische Schraubendruckfeder bezeichnet, ist ein vielfältig eingesetztes Standardbauteil, dessen elastische und (geringen) dissipative Eigenschaften gut ausgeleuchtet und einfach beherrschbar sind. Toleranzen in der Baulänge beziehungsweise der Federkennlinie auf eine vorbestimmte Einbaulänge sind mit einfachen Mitteln ausgleichbar. Zudem benötigen solche Schraubendruckfedern keine zusätzliche Führung, welche ansonsten Reibung verursachen und damit einen verringerten Wirkungsgrad und/oder eine aufgrund von Hysterese-Effekten schwieriger zu ermittelnde Dämpfungseigenschaft aufweisen können. Zudem ermöglicht eine Schraubendruckfeder eine große Varianz in der Federkennlinie, welche unter anderem durch Windungssteigung, Drahtdicke, Verhältnis der Einbaulänge zur entspannten Länge und die Materialwahl einstellbar ist.

Zudem sind Schraubendruckfeder mit gerader Federachse im Vergleich zu anderen Bauarten von Federn, beispielsweise Stahlfedern, bruchsicher und können in einigen Ausführungsformen auf Block belastet werden, sodass für den Fall einer gemäß der Auslegung auftretenden Überlast an dem Torsionsschwingungsdämpfer bei einer solchen auf Block bringbaren Ausführungsform des Energiespeicherelements kein zusätzliches Sicherungselement gegen Brechen des Energiespeicherelements vorgesehen werden muss. Zudem hat eine Schraubendruckfeder den Vorteil eines sehr langen möglichen Federwegs bei gleichzeitig einer hohen Federsteifigkeit, sodass einerseits ein großes Drehmoment über das zumindest eine Energiespeicherelement leitbar ist und andererseits mithilfe der Übersetzungsbahn eine geeignete Bewegungsuntersetzung einrichtbar ist, sodass gegenüber der Amplitude der Torsionsschwingung eine verringerte Amplitude der Bewegung des Zwischenelements erreicht ist und somit die Torsionsschwingungen in einem sehr geringen Federweg der Schraubendruckfeder resultiert. Im Resultat wirkt die Schraubendruckfeder gegenüber der Torsionsschwingung trotz hoher Steifigkeit mit einer (geeignet) geringen Kraft entgegen.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine Prinzip-Skizze eines Torsionsschwingungsdämpfer in einer ersten Ausführungsform;
- Fig. 2:: eine Prinzip-Skizze eines Torsionsschwingungsdämpfer in einer zweiten Ausführungsform;
- Fig. 3:: ein Schaubild der anliegenden Kräfte an einem Zwischenelement;
- Fig. 4:: ein Krafteck der anliegenden Kräfte gemäß Fig. 3;
- Fig. 5:: ein Moment-Verdrehwinkel-Diagramm mit einem ersten Übersetzungsverlauf;
- Fig. 6:: ein Moment-Verdrehwinkel-Diagramm mit einem zweiten Übersetzungsverlauf;
- Fig. 7:: ein Moment-Verdrehwinkel-Diagramm mit einem dritten Übersetzungsverlauf; und
- Fig. 8:: ein Moment-Verdrehwinkel-Diagramm mit einem vierten und fünften Übersetzungsverlauf.

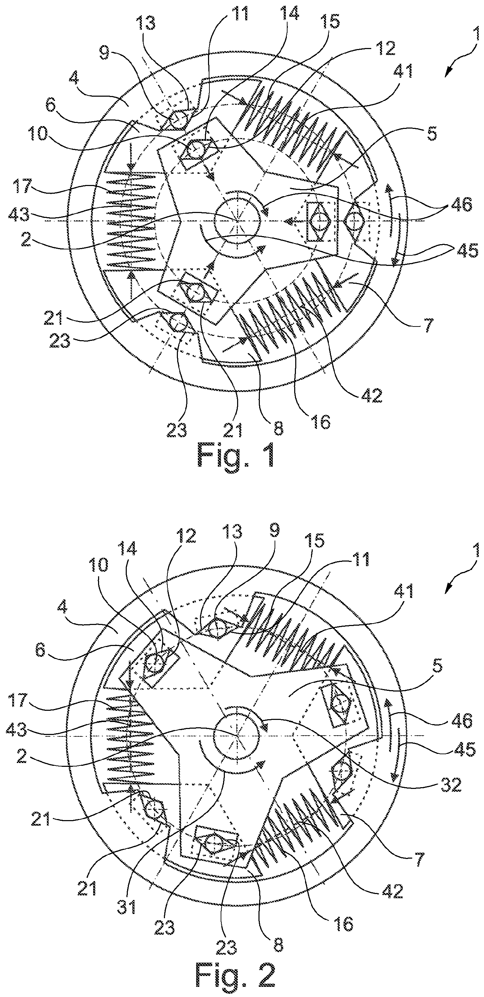

Fig. 1 und Fig. 2 zeigen jeweils in einer Prinzip-Skizze beispielhaft unterschiedliche Ausführungsformen eines Torsionsschwingungsdämpfers 1, welche der Übersichtlichkeit halber weitestgehend gleich dargestellt sind und insofern auf die Beschreibungen zu den jeweiligen Figuren von gleichen Komponenten querverwiesen wird. Hierbei bildet eine Ringscheibe eine Eingangsseite **4.** Im Zentrum bei der gemeinsamen Rotationsachse **2** ist ein weiteres Scheibenelement beispielsweise als Ausgangsseite **5** ausgebildet. Alternativ ist die Ringscheibe die Ausgangsseite **5** und das Scheibenelement die Eingangsseite **4.** Im Folgenden wird die zuvor genannte Variante beschrieben, wobei die Begriffe austauschbar sind.

Wie mit den Pfeilen angedeutet sind ein Zugmoment **45** von der Eingangsseite **4** auf die Ausgangsseite **5** übertragbar und ein Schubmoment **46** von der Ausgangsseite **5** auf die Eingangsseite **4** übertragbar. In einer Ausführungsform ist die Momentenrichtung umgekehrt eingerichtet.

Zwischengeschaltet zwischen der Eingangsseite **4** und der Ausgangsseite **5** sind drei Zwischenelemente **6, 7, 8** vorgesehen, wobei das jeweilige Zwischenelement **6, 7, 8** von paarig angeordneten Energiespeicherelementen **15, 16, 17** kraftübertragend mit dem jeweils benachbarten Zwischenelement **6, 7, 8** verbunden ist. Mittels eines ersten Wälzkörpers **9** ist das jeweilige Zwischenelement **6, 7, 8** an der Eingangsseite **4** abgestützt und mittels eines zweiten Wälzkörpers **10** ist das jeweilige Zwischenelement **6, 7, 8** an der Ausgangsseite **5** abgestützt. Der erste Wälzkörper **9** ist abwälzbar auf einer zwischenelementseitigen ersten Übersetzungsbahn **11** und einer ersten komplementären Gegenbahn **13** an der Eingangsseite **4** kraftübertragend und damit drehmomentübertragend abgestützt. Der zweite Wälzkörper **10** ist abwälzbar auf einer zwischenelementseitigen zweiten Übersetzungsbahn **12** und einer zweiten komplementären Gegenbahn **14** an der Ausgangsseite **5** kraftübertragend und damit drehmomentübertragend abgestützt. Die Wälzkörper **9, 10** sind dabei mittels der Energiespeicherelemente **15, 16, 17** gegen die Übersetzungsbahn **11, 12** und gegen die Gegenbahn **13, 14** vorgespannt und dadurch daran abwälzbar geführt. Die Energiespeicherelemente **15, 16, 17** halten das Zwischenelement **6, 7, 8** einander antagonistisch wirkend in einer Ruhelage in der gezeigten Position. An dem dritten Zwischenelement **8** bei dem ersten Wälzkörper **9** und dem zweiten Wälzkörper **10** (nach der Bezeichnung beim ersten Zwischenelement **6)** ist (der Übersichtlichkeit halber pars-pro-toto) gezeigt, dass seitlich der Ruhelage eine Zugmomentpaarung **21** aus dem jeweils komplementären Rampenanteil der Übersetzungsbahn **11, 12** und der Gegenbahn **13, 14** sowie eine Schubmomentpaarung **23** auf der jeweils anderen Seite aus den komplementären Rampenanteilen der Übersetzungsbahn **11, 12** und der Gegenbahn **13, 14** gebildet sind. Wiederum einzig der Übersichtlichkeit halber ist pars-pro-toto die Zugmomentpaarung **21** einzig an dem ersten Wälzkörper **9** gezeigt und entsprechend die Schubmomentpaarung **23** einzig an dem zweiten Wälzkörper **10** gezeigt. Diese Paarungen sind aber an jedem der Wälzkörper **9, 10** jeweils von der zwischenelementseitigen Übersetzungsbahn **11, 12** und der komplementären Gegenbahn **13, 14** gebildet. Deren Wirkweise wird nachfolgend detailliert erläutert. In den gezeigten Ausführungsformen sind die Zwischenelemente **6, 7, 8** einzig über die jeweiligen Wälzkörper **9, 10** an der Eingangsseite **4** und an der Ausgangsseite **5** abgestützt und untereinander sind die Zwischenelemente **6, 7, 8** mittels der Energiespeicherelemente **15, 16, 17** abgestützt. Eine zusätzliche Führung ist bevorzugt nicht vorgesehen.

In Fig. **1** sind der erste Wälzkörper **9** und der zweite Wälzkörper **10** eines jeweiligen Zwischenelements **6, 7,** 8 radial beabstandet zueinander angeordnet und befinden sich in der Ruhelage auf einem gemeinsamen Radius. Sie weisen also in der Ruhelage keinen Abstand in Umfangsrichtung **19** auf. In Fig. **2** ist eine alternative Ausführungsform hinsichtlich der Anordnung der beiden Wälzkörper **9, 10** eines jeweiligen Zwischenelements **6, 7, 8** zueinander gezeigt, wobei die beiden Wälzkörper **9, 10** keinen radialen Abstand aufweisen, aber in Umfangsrichtung **19** zueinander beabstandet sind. In den gezeigten Ausführungsformen sind der besseren Vergleichbarkeit halber die Energiespeicherelemente **15, 16, 17** gleichartig ausgeführt und gleich angeordnet.

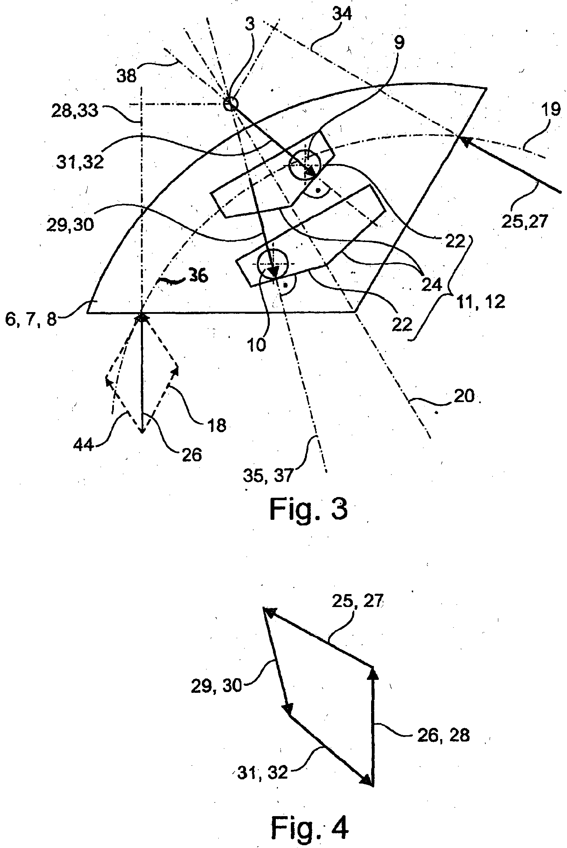

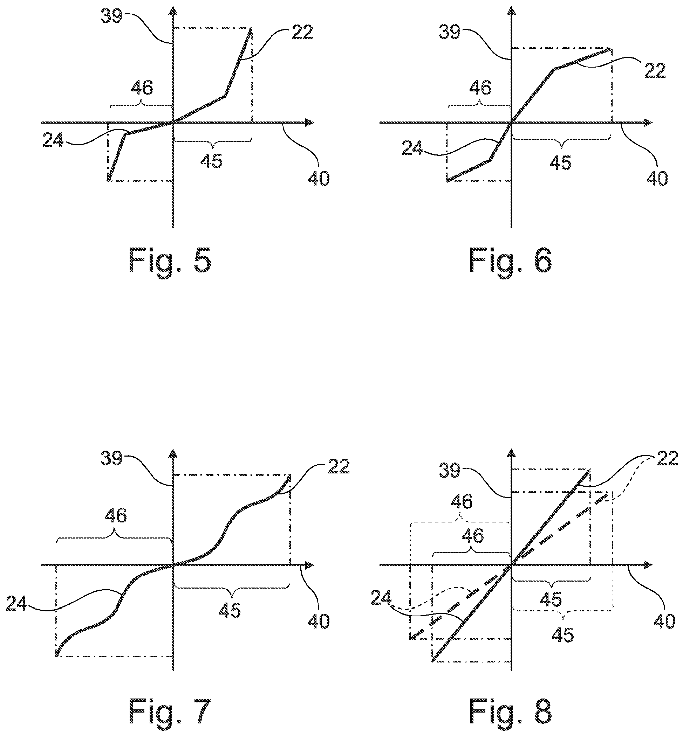

In Fig. **3** ist ein Schaubild des Momentengleichgewichts und in Fig. **4** ein Krafteck über dem ersten Zwischenelement **6,** zweiten Zwischenelement **7** oder dritten Zwischenelement **8** mit einem ersten Wälzkörper **9** und dem zweiten Wälzkörper **10** gemäß der Ausführungsform in Fig. **1** dargestellt. Hierbei ist das Zwischenelement **6, 7, 8** aus seiner Ruhelage herausgeführt und in einem Auslenkwinkel zu der Ruhelage geneigt zu der Ruhelinie **35** ausgelenkt. Die Ruhelinie **35** verläuft stets durch den Momentenbilanzpunkt **3** des Zwischenelements **6, 7, 8,** aber einzig in der Ruhelage durch die Wälzachsen beider Wälzkörper **9, 10,** aber stets durch eine der beiden Wälzachsen (hier des zweiten Wälzkörpers **10).** Zu diesem Momentenbilanzpunkt **3** des Zwischenelements **6, 7, 8** muss ein Momentengleichgewicht herrschen, sofern gefordert ist, dass keine zusätzliche (Zwangs-) Führung für das Zwischenelement **6, 7, 8** vorgesehen ist. Die resultierenden Kraftrichtungen **30, 32** über die Wälzkörper **9, 10,** also die erste Drucklinie **37** des ersten Wälzkörpers **9** und die zweite Drucklinie **38** des zweiten Wälzkörpers **10,** muss zu dem anliegenden (theoretisch infinitesimalen) Abschnitt der Übersetzungsbahn **11, 12** stets senkrecht ausgerichtet sein und durch den Momentenbilanzpunkt **3** verlaufen. Damit diese Regel stets eingehalten bleibt, muss sich eine Parallele der ersten Wirklinie **33** der ersten Kraft **25** ausgehend von dem ersten Energiespeicherelement **15** mit einer zweiten gleich weit oder kraftproportional beabstandeten Parallele der zweiten Wirklinie **34** der zweiten Kraft **26** ausgehend von dem anderen (beispielsweise dritten) Energiespeicherelement **16** mit den beiden Drucklinien **37, 38** in dem Momentenbilanzpunkt **3** schneiden, sodass kein (wirksamer) Hebelarm entsteht. Für eine geeignete Anpressung der Wälzkörper **9, 10** sind die erste Kraft **25** und die zweite Kraft **26** (hier nur an der zweiten Kraft **26** dargestellt) in einen tangentialen Vektoranteil **18** (funktionswirksamer Anteil) und in einen radialen Vektoranteil **44** (Anpressanteil für die Wälzkörper **9, 10)** unterteilt. Die Ausrichtung des tangentialen Vektoranteils **18** ergibt sich aus der Tangente beim Kraftangriffspunkt zu dem Zwischenelement **6, 7,** 8 an der Umfangsrichtung **19** auf einem Radius des Kreises **36,** auf welchem dieser Kraftangriffspunkt liegt. Weiterhin ist gefordert, dass die erste Kraft **25,** die zweite Kraft **26** und die resultierenden Kräfte **29, 31** ein sich selbst aufhebendes Krafteck bilden, wie es in Fig. **4** dargestellt ist. Hierfür muss die erste Kraftrichtung **27,** die zweite Kraftrichtung **28** und die resultierenden Kraftrichtungen **30, 32** der beiden Wälzkörper **9, 10** darstellungsgemäß vorliegen. Aus der gezeigten Lage folgt, dass sowohl das erste Energiespeicherelement **15** (vergleiche Fig. **1****)** als auch das zweite Energiespeicherelement **16** (vergleiche Fig. **1****)** stärker gespannt wird, wodurch eine erhöhte Vorspannkraft auf das Zwischenelement **6, 7, 8** wirkt. Das stärkere Spannen folgt in dieser Ausführungsform aus einer Bewegung des Zwischenelements **6, 7, 8** nach radial innen, sodass die Energiespeicherelemente **15, 16, 17** mit nach radial innen bewegt und zwischen den angrenzenden Zwischenelementen **6, 7,** 8 nach Art einer Schraubzwinge gestaucht werden. Die Zwischenelemente **6, 7, 8** werden also derart bewegt, dass der entstehende Abstand entlang der Federachsen **41, 42, 43** der Energiespeicherelemente **15, 16, 17** zwischen den Zwischenelementen **6, 7, 8** gegenüber der Ruhelage verkürzt wird, sofern eine erhöhte Steifigkeit bei einem höheren Drehmoment erwünscht ist (vergleiche Fig. **5** bis Fig. **8****).** Für die korrekte Ausrichtung der Drucklinien **37, 38** also der Wirklinien der resultierenden Kräfte **29, 31** an den Wälzkörpern **9, 10** ist es notwendig, dass die Drucklinien **37, 38,** welche jeweils die Wälzachse des zugeordneten Wälzkörpers **9, 10** und den Momentenbilanzpunkt **3** schneidet, stets senkrecht auf der Übersetzungsbahn **11, 12** steht, hier der ersten Übersetzungskurve **22,** welche dem Zugmoment **45** zugeordnet ist. Der jeweilige Betrag der resultierenden Kraft **29, 31** und die resultierende Kraftrichtung **30, 32** ergeben sich dann intrinsisch aus der anliegenden ersten Kraft **25** und zweiten Kraft **26.**

In den Fig. **5** bis Fig. **8** sind Moment-Verdrehwinkel-Diagramme gezeigt, bei welchen die Momentenachse **39** die Ordinate bildet und die Verdrehwinkelachse **40** die Abszisse. Rechts der Ordinate ist in diesem Beispiel ein Zugmomentverlauf mit positiv abgetragenem Moment und Verdrehwinkel gezeigt und links der Ordinate ein Schubmomentverlauf mit negativ abgetragenem Moment und Verdrehwinkel.

In Fig. 5 ist eine erste Übersetzungskurve **22,** dann zugehörig zu der Zugmomentpaarung **21,** und eine zweite Übersetzungskurve **24,** dann zugehörig zu der Schubmomentpaarung **23,** in einer zweiteilig-progressiven Form gezeigt, sodass bei niedrigen Drehmomentbeträgen ein flacher Kurvenanstieg und bei hohen Drehmomentbeträgen ein steiler Kurvenanstieg vorliegt.

In Fig. **6** ist entsprechend eine zweiteilig-degressive Variante gezeigt, bei welcher bei niedrigen Drehmomentbeträgen ein steiler Kurvenanstieg vorliegt und bei hohen Drehmomentbeträgen ein abgeflachter Kurvenanstieg vorliegt.

In Fig. **7** ist eine Variante gezeigt, bei welcher sich ein progressiver und degressiver Verlauf abwechseln und in Fig. **8** ist im Vergleich ein steifes System mit einem steilen Kurvenverlauf, dargestellt mit durchgezogener Linie, im Vergleich zu einem System mit einem flachen Kurvenverlauf, dargestellt mit gestrichelter Linie, gezeigt.

Für die Ausführungsform in Fig. **1** und Fig. **2** ohne zusätzliche Führung des Zwischenelements **6, 7,** 8 ist eine solche Übersetzungskurve **22, 24** nach Maßgabe des Momentengleichgewichts und Kräftegleichgewichts wie in Fig. **3** und Fig. **4** erläutert einzuhalten. Die dargestellte Übersetzungskurve **22, 24** ist daher in Überlagerung mit der Anforderung an die Übersetzungsbahn **11, 12** gemäß der Beschreibung zu Fig. **1** (und Fig. **2****)** auszuführen. Weiterhin ist in einer Ausführungsform die Kraft **25** beziehungsweise die Steifigkeit des ersten Energiespeicherelements **15** gegenüber dem zweiten Energiespeicherelement **16** in der Ruhelage unterschiedlich und nicht wie in Fig. **1** und Fig. **2** angedeutet symmetrisch ausgeführt. Dies ist weiterhin für die Überlagerung zum Erreichen der gewünschten Übersetzungskurve **22, 24** zu beachten.

Mit dem hier vorgeschlagenen Torsionsschwingungsdämpfer ist mit wenigen Bauteilen eine kostengünstige und effiziente Beeinflussung der Eigenfrequenz erreichbar.

## Patentansprüche

1. Torsionsschwingungsdämpfer (1) mit einer Rotationsachse (2) für einen Antriebsstrang, aufweisend zumindest die folgenden Komponenten:
- eine Eingangsseite (4) zum Aufnehmen eines Drehmoments;
- eine Ausgangsseite (5) zum Abgeben eines Drehmoments;
- zumindest zwei Zwischenelemente (6,7,8) in drehmomentübertragender Verbindung zwischen der Eingangsseite (4) und der Ausgangsseite (5);
- je Zwischenelement (6,7,8) einen ersten Wälzkörper (9) und einen zweiten Wälzkörper (10),
wobei die Zwischenelemente (6,7,8) jeweils eine erste Übersetzungsbahn (11) zum Abwälzen des ersten Wälzkörpers (9) und eine zweite Übersetzungsbahn (12) zum Abwälzen des zweiten Wälzkörpers (10) aufweisen,
wobei die Eingangsseite (4) eine zu der ersten Übersetzungsbahn (11) komplementäre erste Gegenbahn (13) und die Ausgangsseite (5) eine zu der zweiten Übersetzungsbahn (12) komplementäre zweite Gegenbahn (14) aufweist, wobei der erste Wälzkörper (9) zwischen der ersten Übersetzungsbahn (11) und der ersten Gegenbahn (13) abwälzbar geführt ist und der zweite Wälzkörper (10) zwischen der zweiten Übersetzungsbahn (12) und der zweiten Gegenbahn (14) abwälzbar geführt ist;
- eine zu der Anzahl der Zwischenelemente korrespondierende Anzahl von Energiespeicherelementen (15,16,17), mittels welcher das dem Energiespeicherelement (15,16,17) zugeordnete Zwischenelement (6,7,8) schwingbar abgestützt ist,
wobei jedes der Zwischenelemente (6,7,8) mittels der zugeordneten Energiespeicherelemente (15,16,17) an dem jeweils zumindest einen benachbarten Zwischenelement (7,8,6) abgestützt ist,
**dadurch gekennzeichnet, dass**
je Zwischenelement (6,7,8) als abwälzbare Körper ausschließlich der erste Wälzkörper (9) und der zweite Wälzkörper (10) vorgesehen sind.

2. Torsionsschwingungsdämpfer nach Anspruch 1, wobei das Energiespeicherelement (15,16,17) mit einem Vektoranteil (18) in Umfangsrichtung (19) auf das zugeordnete Zwischenelement (6,7,8) wirkend angeordnet ist,
wobei genau drei Zwischenelemente (6,7,8) und genau drei Energiespeicherelemente (15,16,17) vorgesehen sind, wobei das erste Zwischenelement (6) und das zweite Zwischenelement (7) mittels des ersten Energiespeicherelements (15), das zweite Zwischenelement (7) und das dritte Zwischenelement (8) mittels des zweiten Energiespeicherelements (16), sowie das erste Zwischenelement (6) und das dritte Zwischenelement (8) mittels des dritten Energiespeicherelements (17) aneinander abgestützt sind.

3. Torsionsschwingungsdämpfer (1) nach Anspruch 1 oder 2, wobei jedes der Zwischenelemente (6,7,8) jeweils einzig mittels des zumindest einen zugeordneten Energiespeicherelements (15,16,17) und mittels der Wälzkörper (9,10) gelagert ist.

4. Torsionsschwingungsdämpfer (1) nach einem der vorhergehenden Ansprüche, wobei die beiden Wälzkörper (9,10) radial zueinander beabstandet angeordnet sind und/oder in Umfangsrichtung (19) zueinander beabstandet angeordnet sind.

5. Torsionsschwingungsdämpfer (1) nach einem der vorhergehenden Ansprüche, wobei die Übersetzungsbahnen (11,12) und die jeweils komplementären Gegenbahnen (13,14) jeweils eine Zugmomentpaarung (21) mit einer ersten Übersetzungskurve (22) und eine Schubmomentpaarung (23) mit einer zweiten Übersetzungskurve (24) umfassen, wobei die Zugmomentpaarung (21) zur Drehmomentübertragung von der Eingangsseite (4) auf die Ausgangsseite (5) eingerichtet ist, und wobei die Schubmomentpaarung (23) zur Drehmomentübertragung von der Ausgangsseite (5) auf die Eingangsseite (4) eingerichtet ist, und wobei die erste Übersetzungskurve (22) und die zweite Übersetzungskurve (24) zumindest bereichsweise voneinander unterschiedliche Übersetzungsverläufe aufweisen.

6. Torsionsschwingungsdämpfer (1) nach einem der vorhergehenden Ansprüche, wobei die Zwischenelemente (6,7,8) mittels zwei antagonistischen Energiespeicherelementen (15,16,17) vorgespannt sind, wobei bevorzugt das erste Energiespeicherelement (15) eine erste Kraft (25) und eine erste Kraftrichtung (27) auf das zugeordnete Zwischenelement (6,7) ausübt und das zweite Energiespeicherelement (16) eine zweite Kraft (26) und eine zweite Kraftrichtung (28) auf das zugeordnete Zwischenelement (6,8) ausübt, und wobei sich die erste Kraft (25) und die zweite Kraft (26) in einer Ruhelage voneinander unterscheiden und/oder sich die erste Kraftrichtung (27) und die zweite Kraftrichtung (28) in einer Ruhelage voneinander unterscheiden.

7. Torsionsschwingungsdämpfer (1) nach einem der vorhergehenden Ansprüche, wobei die Energiespeicherelemente (15,16,17) eine Schraubendruckfeder mit gerader Federachse (41,42,43) sind.

## Claims

1. A torsional vibration damper (1) with a rotational axis (2) for a powertrain, comprising at least the following components:
- an input side (4) for receiving a torque;
- an output side (5) for outputting a torque,
- at least two intermediate elements (6, 7, 8) in torque-transmitting connection between the input side (4) and the output side (5);
- a first rolling body (9) and a second rolling body (10) for each intermediate element (6, 7, 8),
wherein the intermediate elements (6, 7, 8) each comprise a first transmission track (11) for rolling of the first rolling body (9) and a second transmission track (12) for rolling of the second rolling body (10), the input side (4) comprising a first counter-track (13) complementary to the first transmission track (11) and the output side (5) comprising a second counter-track (14) complementary to the second transmission track (12),
the first rolling body (9) being guided to roll between the first transmission track (11) and the first counter-track (13) and the second rolling body (10) being guided to roll between the second transmission track (12) and the second counter-track (14);
- a number of energy storage elements (15, 16, 17) corresponding to the number of intermediate elements, by means of which the intermediate element (6, 7, 8) associated to the respective energy storage element (15, 16, 17) is supported so as to be oscillatable, each of the intermediate elements (6, 7, 8) being supported by means of the associated energy storage elements (15, 16, 17) on the at least one adjacent intermediate element (7, 8, 6),
**characterised in that**
only the first rolling body (9) and the second rolling body (10) are provided as rolling bodies for each intermediate element (6, 7, 8).

2. The torsional vibration damper according to claim 1, wherein the energy storage element (15, 16, 17) is arranged with a vector component (18) acting in the circumferential direction (19) on the associated intermediate element (6, 7, 8),
wherein exactly three intermediate elements (6, 7, 8) and exactly three energy storage elements (15, 16, 17) are provided, the first intermediate element (6) and the second intermediate element (7) being supported against one another by means of the first energy storage element (15), the second intermediate element (7) and the third intermediate element (8) being supported against one another by means of the second energy storage element (16), and the first intermediate element (6) and the third intermediate element (8) being supported against one another by means of the third energy storage element (17).

3. The torsional vibration damper (1) according to claim 1 or 2, wherein each of the intermediate elements (6, 7, 8) is mounted solely by means of the at least one associated energy storage element (15, 16, 17) and by means of the rolling bodies (9, 10).

4. The torsional vibration damper (1) according to any one of the preceding claims, wherein the two rolling bodies (9, 10) are arranged radially spaced apart from each other and/or are arranged spaced apart from each other in the circumferential direction (19).

5. The torsional vibration damper (1) according to any one of the preceding claims, wherein the transmission tracks (11, 12) and the complementary counter-tracks (13, 14) each comprise a tensile torque pair (21) having a first transmission curve (22) and a compressive torque pair (23) having a second transmission curve (24), the tensile torque pair (21) being configured for torque transmission from the input side (4) to the output side (5), and the compressive torque pair (23) being configured for torque transmission from the output side (5) to the input side (4),
and wherein the first transmission curve (22) and the second transmission curve (24) have at least partially different transmission profiles.

6. The torsional vibration damper (1) according to any one of the preceding claims, wherein the intermediate elements (6, 7, 8) are prestressed by means of two antagonistic energy storage elements (15, 16, 17),
wherein preferably the first energy storage element (15) exerts a first force (25) and a first force direction (27) on the associated intermediate element (6, 7) and the second energy storage element (16) exerts a second force (26) and a second force direction (28) on the associated intermediate element (6, 8), and wherein the first force (25) and the second force (26) differ from each other in a rest position and/or the first force direction (27) and the second force direction (28) differ from each other in a rest position.

7. The torsional vibration damper (1) according to any one of the preceding claims, wherein the energy storage elements (15, 16, 17) are helical compression springs which have straight spring axes (41, 42, 43).

## Revendications

1. Amortisseur de vibrations de torsion (1) comprenant un axe de rotation (2) pour un groupe motopropulseur, présentant au moins les composants suivants :
- un côté entrée (4) pour recevoir un couple ;
- un côté sortie (5) pour délivrer un couple ;
- au moins deux éléments intermédiaires (6, 7, 8) en liaison de transmission de couple entre le côté entrée (4) et le côté sortie (5) ;
- pour chaque élément intermédiaire (6, 7, 8) un premier corps de roulement (9) et un second corps de roulement (10),
dans lequel les éléments intermédiaires (6, 7, 8) présentent respectivement une première piste de translation (11) pour faire rouler le premier corps de roulement (9) et une seconde piste de translation (12) pour faire rouler le second corps de roulement (10), dans lequel le côté entrée (4) présente une première contre-piste (13) complémentaire à la première piste de translation (11) et le côté sortie (5) présente une seconde contre-piste (14) complémentaire à la seconde piste de translation (12),
dans lequel le premier corps de roulement (9) est guidé pour rouler entre la première piste de translation (11) et la première contre-piste (13) et le second corps de roulement (10) est guidé pour rouler entre la seconde piste de translation (12) et la seconde contre-piste (14) ;
- un certain nombre d'éléments de stockage d'énergie (15, 16, 17) correspondant au nombre d'éléments intermédiaires, au moyen desquels l'élément intermédiaire (6, 7, 8) associé à l'élément de stockage d'énergie (15, 16, 17) est supporté de manière oscillante, dans lequel chacun des éléments intermédiaires (6, 7, 8) est supporté au moyen des éléments de stockage d'énergie (15, 16, 17) associés sur respectivement l'au moins un élément intermédiaire (7, 8, 6) adjacent,
**caractérisé en ce que**
pour chaque élément intermédiaire (6, 7, 8), seuls le premier corps de roulement (9) et le second corps de roulement (10) sont prévus comme corps roulants.

2. Amortisseur de vibrations de torsion selon la revendication 1, dans lequel l'élément de stockage d'énergie (15, 16, 17) est agencé avec une composante vectorielle (18) agissant dans la direction circonférentielle (19) sur l'élément intermédiaire (6, 7, 8) associé,
dans lequel exactement trois éléments intermédiaires (6, 7, 8) et exactement trois éléments de stockage d'énergie (15, 16, 17) sont prévus, dans lequel le premier élément intermédiaire (6) et le deuxième élément intermédiaire (7) sont supportés au moyen du premier élément de stockage d'énergie (15), le deuxième élément intermédiaire (7) et le troisième élément intermédiaire (8) au moyen du deuxième élément de stockage d'énergie (16), et le premier élément intermédiaire (6) et le troisième élément intermédiaire (8) au moyen du troisième élément de stockage d'énergie (17).

3. Amortisseur de vibrations de torsion (1) selon la revendication 1 ou 2, dans lequel chacun des éléments intermédiaires (6, 7, 8) est monté respectivement uniquement au moyen d'au moins un élément de stockage d'énergie (15, 16, 17) associé et au moyen des corps de roulement (9, 10).

4. Amortisseur de vibrations de torsion (1) selon l'une quelconque des revendications précédentes, dans lequel les deux corps de roulement (9, 10) sont agencés radialement espacés l'un de l'autre et/ou sont agencés dans la direction circonférentielle (19) espacés l'un de l'autre.

5. Amortisseur de vibrations de torsion (1) selon l'une quelconque des revendications précédentes, dans lequel les pistes de translation (11, 12) et les contre-pistes (13, 14) complémentaires respectives comprennent respectivement un couplage de couple de traction (21) comportant une première courbe de translation (22) et un couplage de couple de cisaillement (23) comportant une seconde courbe de translation (24), dans lequel le couplage de couple de traction (21) est destiné à la transmission de couple du côté entrée (4) au côté sortie (5), et dans lequel le couplage de couple de cisaillement (23) est destiné à la transmission de couple du côté sortie (5) au côté entrée (4),
et dans lequel la première courbe de translation (22) et la seconde courbe de translation (24) présentent des profils de translation différents l'un de l'autre au moins par zones.

6. Amortisseur de vibrations de torsion (1) selon l'une quelconque des revendications précédentes, dans lequel les éléments intermédiaires (6, 7, 8) sont précontraints au moyen de deux éléments de stockage d'énergie (15, 16, 17) antagonistes,
dans lequel de préférence le premier élément de stockage d'énergie (15) exerce une première force (25) et une première direction de force (27) sur l'élément intermédiaire (6, 7) associé et le deuxième élément de stockage d'énergie (16) exerce une seconde force (26) et une seconde direction de force (28) sur l'élément intermédiaire (6, 8) associé, et dans lequel la première force (25) et la seconde force (26) diffèrent l'une de l'autre en position de repos et/ou la première direction de force (27) et la seconde direction de force (28) diffèrent l'une de l'autre en position de repos.

7. Amortisseur de vibrations de torsion (1) selon l'une quelconque des revendications précédentes, dans lequel les éléments de stockage d'énergie (15, 16, 17) sont un ressort de compression hélicoïdal comportant un axe de ressort droit (41, 42, 43).
